# EUROPÄISCHE PATENTSCHRIFT

(11) **EP 3 583 069 B1**
(45) Veröffentlichungstag und Bekanntmachung des Hinweises auf die Patenterteilung: **26.04.2023**
(21) Anmeldenummer: 17816494.3
(22) Anmeldetag: 23.11.2017
(51) Int. Cl.: C01G 51/02, C01G 1/04

(54) **VERFAHREN ZUR HERSTELLUNG VON COBALTCARBONYL**
PROCESS FOR THE PRODUCTION OF COBALT CARBONYL
PROCÉDÉ DE FABRICATION DE CARBONYLE DE COBALT

(30) Priorität: 16.02.2017 DE 102017103217
(43) Veröffentlichungstag der Anmeldung: 25.12.2019
(73) Patentinhaber: Umicore AG & Co. KG, 63457 Hanau-Wolfgang (DE)
(72) Erfinder: RIVAS NASS, Andreas, 64625 Bensheim (DE); RAMON MUELLER, Ruben, 61130 Nidderau (DE); DOPPIU, Angelino, 63500 Seligenstadt (DE); WOERNER, Eileen, 61130 Nidderau (DE); KARCH, Ralf, 63801 Kleinostheim (DE)
(74) Vertreter: Clauswitz, Kai-Uwe Wolfram
(86) Internationale Anmeldenummer: PCT/EP2017/080179
(87) Internationale Veröffentlichungsnummer: WO 2018/149525

(56) Entgegenhaltungen:
- DE-A1- 2 332 638
- DE-B- 1 071 683
- US-A- 2 865 716
- US-A- 3 236 597

## Beschreibung

Die Erfindung betrifft ein Verfahren zur kontinuierlichen Herstellung von Cobaltcarbonylen in einem Reaktionsemisch, gemäß Anspruch 1.

### Stand der Technik

Metallcarbonyle sind Komplexverbindungen von Übergangsmetallen mit Kohlenstoffmonoxid als Ligand. Die Metall liegen dabei in der Oxidationsstufe +/- 0 vor. Metallcarbonyle sind wichtige Zwischen- und Endprodukte in der organischen Synthese. Metallcarbonyle werden auch als Vorläuferverbindungen (Precursoren) bei der Abscheidung von Übergangsmetallen zur Herstellung von Beschichtungen eingesetzt. Dabei ist Dicobaltoctacarbonyl eine zentrale Vorläuferverbindung für die Herstellung von Atomlagenschichten, die Cobalt enthalten, durch ALD (Atomic Layer Deposition; Thin Solid Films 517 (2009) 2563-2580; Appl. Phys. Lett. 88 (2006) 051903-051907; Appl. Phys. Lett. 88 (2003) 2883-2885; Nano Lett. 12 (2012) 4775-4783). ALD ist eine Beschichtungstechnologie, bei der Chemikalien thermisch oder chemisch in hochreinen Reaktoren (ALD-Kammern) behandelt werden. Diese Behandlung zielt darauf ab, bestimmte Elemente oder Kompositionen auf einer Oberfläche (Trägeroberfläche, im Allgemeinen als Wafer bekannt) abzuscheiden. Das Verfahren wird in Zyklen wiederholend betrieben, was zu einem Wachstum einer gebildeten Schicht führt. Diese Art von hochselektiver, reinster und hoch geordneter Schichtenbildung (im Unterschied zu Plasmaabscheidung PVD oder klassischer CVD) wird zur Bildung von auf Schichten basierten Materialien benötigt, die beispielsweise Anwendung in elektronischen Bauteilen (Logic- oder Memory-Chips), LEDs oder PV-Zellen (PV = Photovoltaik) finden.

Für die ALD werden besondere Vorläuferverbindungen (Precursoren) benötigt. Im Bereich Cobalt-Precursoren ist Dicobaltoctacarbonyl die entscheidende Ausgangssubstanz zur Herstellung verschiedenster Cobalt-Precursoren für die finale Anwendung in den ALD-Abscheidungsprozessen.

Wegen der hohen praktischen Bedeutung von Metallcarbonylen besteht ein stetiger Bedarf nach verbesserten Verfahren zu ihrer Herstellung. Dabei ist es wünschenswert, Metallcarbonyle in einfachen und effizienten Prozessen in möglichst hoher Ausbeute und Reinheit herzustellen. Da solche Metallkomplexe instabil sind und zur Zersetzung neigen, und daher nicht einfach zu handhaben sind, ist die Herstellung im Allgemeinen nicht trivial. Das Verfahren wird im Allgemeinen dadurch erschwert, dass es in einem Mehrphasensystem stattfindet, wobei gasförmiges (und zudem hochgiftiges) Kohlenmonoxid zugeführt wird, und wobei das Metallcarbonyl ein Feststoff ist.

Zur Herstellung von Metallcarbonylen werden im Stand der Technik üblicherweise konventionelle Batchreaktionen eingesetzt. Dabei werden die Ausgangsstoffe in einen Autoklaven gegeben, in dem die Reaktion unter hohem Druck und hoher Temperatur durchgeführt wird. Allerdings sind solche Batchreaktionen für die großtechnische Herstellung von Metallcarbonylen nicht oder nur wenig geeignet. Zum einen sind in Autoklaven Druck und Temperatur nicht oder nur schwer kontrollierbar und einstellbar, insbesondere wenn größere Mengen umgesetzt werden. Zudem anderen ist grundsätzlich nachteilig, dass Batchreaktionen wegen der notwendigen Rüstzeit für die Befüllung und Reinigung der Gefäße und die Abtrennung des Produktes arbeitsaufwändig sind.

Es wäre daher wünschenswert, kontinuierliche Verfahren zur Herstellung von Metallcarbonylen bereitzustellen. Allerdings ist die kontinuierliche Durchführung solcher Verfahren nicht trivial, unter anderem weil sie bei hohem Druck und hoher Temperatur durchgeführt werden, gasförmiges Kohlenmonoxid erfordern und zu instabilen Metallcarbonylen führen. Solchen Reaktionen erfordern oft spezielle, komplexe Apparaturen und Versuchsanordnungen, wobei selbst dann das gewünschte Produkt oft nicht in hoher Ausbeute erhalten wird.

So sind die bekannten Verfahren zur Darstellung von Co₂(CO)₈ nur mit hohem Aufwand (hohe Drücke bis ca. 500 bar, Temperaturen bis 300°C, große Batchreaktoren) in den Produktionsmaßstab skalierbar und/oder liefern das Produkt nicht in ausreichender Reinheit. Konkrete Probleme sind dabei unter anderem Verunreinigungen des Produktes mit Reduktionsmetallen wie Zn, oder dass das Produkt als Gemisch mit anderen Cobaltverbindungen erhalten wird. Problematisch ist auch, dass das Produkt bei bekannten Verfahren nicht als Feststoff, sondern als Lösung in organischen, mit Wasser nicht mischbaren Lösungsmitteln erhalten wird. Auch die Ausbeuten sind regelmäßig verbesserungsbedürftig.

Das US 2,865,716 beschreibt Verfahren zur Herstellung von Dicobaltoctacarbonyl durch Umsetzung von Cobaltsalzen organischer Säuren mit Kohlenmonoxid. Die Reaktion wird als konventionelle Batchreaktion im Autoklaven bei hoher Temperatur und hohem Druck durchgeführt. Die Reaktion erfolgt im Labormaßstab, wobei die Mengen der Ausgangsstoffe und Produkte im Grammbereich liegen. Bei den verschiedenen im Einzelnen beschriebenen Reaktionen werden Ausbeuten zwischen etwa 30% und 78% erhalten, was im Batchmaßstab noch verbesserungsbedürftig ist.

Besonders problematisch ist, dass das Batchverfahren der US 2,865,716 relativ lange Reaktionszeiten im Bereich von mehreren Stunden erfordert. Batchverfahren, die bereits im Autoklaven Reaktionszeiten von mehreren Stunden erfordern, können im Allgemeinen nicht effizient und mit guter Ausbeute als kontinuierliche Verfahren durchgeführt werden. Wenn eine Reaktion zu langsam verläuft, können bei einem kontinuierlichen Verfahren die Zuführung der Edukte und der Abtransport der Produkte nicht mit der notwendigen Geschwindigkeit erfolgen.

Die DE 23 32 638 A1 beschreibt ein kontinuierliches Verfahren zur Herstellung von Dicobaltoctacarbonyl. Gemäß dem Ausführungsbeispiel wird wässrige Cobaltacetatlösung in Gegenwart von Butanol, Kohlenmonoxid und Wasserstoff bei erhöhter Temperatur und erhöhtem Druck umgesetzt. Das Verfahren ist sehr ineffizient, weil das Cobaltacetat in hochverdünnter wässriger Lösung eingesetzt wird (1% Co²⁺). Das Verfahren wird daher nur im Labormaßstab mit Mengen im Milliliter-Bereich beschrieben. Die Hochskalierung auf Produktionsmaßstab wäre aufwändig und ineffizient, da wegen der starken Verdünnung große Vorrichtungen erforderlich wären. Ein weiterer Nachteil ist, dass die Reaktion in Gegenwart von Wasserstoff durchgeführt wird. Dies ist nicht wünschenswert, weil molekularer Wasserstoff explosiv, nur schwer handhabbar und teuer ist. Nachteilig ist auch, dass das Produkt in verdünnter wässriger Lösung vorliegt, was für viele Nachfolgeanwendungen unvorteilhaft ist. Zur Ausbeute und Reinheit des Produktes werden im Übrigen keine Angaben gemacht. Insgesamt ist das Verfahren nicht geeignet, um Dicobaltoctacarbonyl effizient im Produktionsmaßstab herzustellen.

Es besteht daher ein Bedarf nach Verfahren, welche die oben beschriebenen Nachteile überwinden. Insbesondere besteht ein Bedarf nach Verfahren zur Herstellung von Metallcarbonylen, wie Dicobaltoctacarbonyl, in hoher Ausbeute und in hoher Reinheit, die im Produktionsmaßstab durchführbar sind. Wünschenswert wäre insbesondere ein kontinuierliches Verfahren, das auf einfache Weise durchführbar, steuerbar und skalierbar ist.

### Aufgabe der Erfindung

Der Erfindung liegt die Aufgabe zugrunde, Verfahren bereitzustellen, welche die oben beschriebenen Nachteile überwinden. Insbesondere sollen effiziente, verbesserte Verfahren zur Herstellung von Cobaltcarbonylen bereitgestellt werden. Der Erfindung liegt insbesondere die Aufgabe zugrunde, verbesserte Verfahren zur Herstellung von Dicobaltoctacarbonyl bereitzustellen.

Die Verfahren sollen es ermöglichen, Cobaltcarbonyle im industriellen Maßstab in großen Ausbeuten und in hoher Reinheit herzustellen. Die Verfahren sollen möglichst einfach und effizient durchführbar sein. Dabei sollen möglichst wenige Ausgangsstoffe und Additive benötigt werden. Insbesondere soll der Zusatz von Verbindungen vermieden werden, die das Produkt verunreinigen, wie Metalle und Metallverbindungen, oder von hochreaktiven Verbindungen, wie Wasserstoff.

### Offenbarung der Erfindung

Überraschenderweise wird die der Erfindung zugrunde liegende Aufgabe gelöst durch Verfahren gemäß den Patentansprüchen.

### Gegenstand der Erfindung ist ein kontinuierliches

Verfahren zur Herstellung von Cobaltcarbonylen, wobei in einem Reaktor eine Reaktion mit einem Reaktionsgemisch, das folgende Komponenten enthält, durchgeführt wird:
(a) Cobalt(II)bis(2-ethylhexanoat),
(b) Kohlenmonoxid,
(c) einen aliphatischen Alkohol mit 4 bis 7 Kohlenstoffatomen, bevorzugt Butanol, und
(d) ein Lösungsmittel, das Kohlenwasserstoffe aufweist,
wobei die mittlere Verweilzeit in dem Reaktor kleiner 60 min ist.

Dabei reagieren die Komponenten (a) bis (c) zu dem Metallcarbonyl. Bevorzugt umfasst das Verfahren nur einen einzigen Reaktionsschritt, der in dem Reaktionsgemisch erfolgt. Die Reaktion ist im Wesentlichen eine Redoxreaktion, bei dem unter anderem das Metall reduziert wird, in Verbindung mit einer Veresterung von Butanol.

Erfindungsgemäß wurde gefunden, dass die Reaktion der Komponenten (a) bis (c) unerwartet schnell verläuft. Die Reaktion ist daher durch eine relativ kurze Verweilzeit charakterisiert, wobei die mittlere Verweilzeit kleiner als 60 Minuten ist. Bei einem Prozess ist die mittlere Verweilzeit die Zeit, in der z. B. ein definiertes Flüssigkeitsvolumen in einem Reaktor "verweilt". Die Verweilzeit gibt damit auch an, wie lange eine gelöste Verbindung in dem Reaktor verweilt, deren Konzentration sich nicht durch die Reaktion verringert. Die Verweilzeit wird mit dem griechischen Buchstaben τ (Tau) bezeichnet und beschreibt insbesondere bei kontinuierlichen Reaktionen die Effizienz des Prozesses. Für eine kontinuierliche Reaktion kann die mittlere Verweilzeit aus dem Quotienten des Reaktorvolumens zum austretenden Volumenstrom errechnet werden. Die Verweilzeit kann auch empirisch ermittelt werden, indem die Durchflussdauer einer inerten Tracerverbindung gemessen wird. Bei einem Batchreaktor ist die Verweilzeit gleich der Reaktionszeit.

Erfindungsgemäß kann eine hohe Ausbeute selbst dann erreicht werden, wenn die Verweilzeit relativ niedrig ist. Dabei kann es ausreichen, wenn die mittlere Verweilzeit nicht mehr als 40 min, nicht mehr als 30 min, kleiner 20 min oder kleiner 15 min ist. Die Verweilzeit ist dabei bevorzugt größer als 1 min, größer als 2 min oder größer als 5 min. In einer bevorzugten Ausführungsform ist die durchschnittliche Verweilzeit von 2 min bis 60 min, insbesondere von 5 min bis 30 min, oder von 5 min bis 20 min.

Die Reaktion wird kontinuierlich durchgeführt. Mit einem kontinuierlichen Prozess wird, wie in der chemischen Verfahrenstechnik üblich, ein solcher bezeichnet, der fortlaufend und ohne Unterbrechungen durchgeführt werden kann. Dabei können Ausgangsstoffe zugeführt und Produkte abgetrennt werden, während die Reaktion stattfindet. Die kontinuierliche Reaktion steht im Gegensatz zu einem Batchverfahren (Chargenverfahren), bei dem Ausgangsstoffe vor Beginn der Reaktion vorgelegt werden und das Produkt erst nach Reaktionsende abgetrennt wird. Üblicherweise finden kontinuierliche Prozesse in Reaktoren statt, die von dem Reaktionsgemisch durchströmt werden, während Batchprozesse in geschlossenen Gefäßen durchgeführt werden.

Das Produkt ist ein Cobaltcarbonyl, also eine Verbindung der Formel Co_{y}(CO)_{z}. Dabei ist y bevorzugt eine ganze Zahl zwischen 1 und 3 und z bevorzugt eine ganze Zahl von 4 bis 12. Das Metallcarbonyl kann beispielsweise die Formel Co₃(CO)₁₂, Co₂(CO)₈, Co(CO)₄, Co(CO)₅ oder Co(CO)₆ aufweisen.

Die allgemeine Reaktionsgleichung der Reaktion mit dem Butanol und Kohlenmonoxid ist nachfolgend dargestellt:

*2 Co(RCOO)₂* +*10 CO* + *4 C₄H₉OH* → *[Co(CO)₄]₂* + *4 RCOOC₄H₉* + 2 *CO₂* + *2 H₂O*

Das Metallcarboxylat ist Cobalt(II)bis(2-ethylhexanoat) (auch als Cobalt(II)ethylhexanoat bezeichnet), das die Formel (I) aufweist:

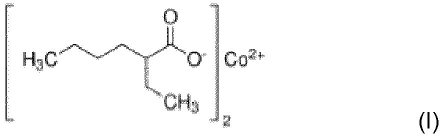

Besonders bevorzugt ist das Metallcarbonyl Dicobaltoctacarbonyl der Formel Co₂(CO)₈.

Bevorzugt wird das Metallcarboxylat bereits in gelöster Form in den Reaktor eingeführt. Besonders bevorzugt wird das Metallcarboxylat in Form einer Lösung in einem Kohlenwasserstoffgemisch eingesetzt. Solche Lösungen von Metallcarboxylaten in Kohlenwasserstoffgemischen sind kommerziell erhältlich. Beispielsweise ist eine Lösung von 70% Cobalt-2-ethylhexanoat in 25% Kohlenwasserstoffgemisch von der Firma Umicore unter der Markenbezeichnung VALIREX vertrieben, wobei verschiedene Cobalt-Konzentrationen erhältlich sind.

Das Reaktionsgemisch enthält als Komponente (b) Kohlenmonoxid (Kohlenstoffmonoxid, CO). Durch erhöhten Druck kann eine effiziente Durchmischung der flüssigen Phase mit der Gasphase erreicht werden. Das Kohlenmonoxid wird dem Reaktor in geeigneter Form zugeführt, beispielsweise als Gas. In einer bevorzugten Ausführungsform wird das Kohlenmonoxid druckverflüssigt oder als superkritisches Fluid zugeführt und/oder liegt während der Reaktion in dieser Form vor.

Das Reaktionsgemisch enthält als Komponente (c) einen aliphatischen Alkohol mit 4 bis 7 Kohlenstoffatomen. Aliphatische Alkohole bestehen aus dem Elementen C, O und H. Der Alkohol bildet bei der Reaktion im Allgemeinen mit dem Carboxylat einen Alkylester. Der Alkohol ist bevorzugt ein einwertiger Alkohol, er kann aber auch höherwertig sein, beispielsweise zwei- oder dreiwertig. Der Alkohol kann linear, verzweigt oder zyklisch sein. Der Alkohol ist vorteilhaft ausgewählt aus Butanol, Pentanol, Hexanol und Heptanol. Bevorzugt ist der Alkohol ein linearer Alkohol und/oder ein 1-Alkohol. Besonders bevorzugt ist der Alkohol Butanol. Besonders bevorzugt wird n-Butanol (1-Butanol) eingesetzt.

Das Reaktionsgemisch enthält als Komponente (d) ein Lösungsmittel. Geeignete Lösungsmittel sind Verbindungen oder Gemische, welche das Metallcarboxylat (a) lösen und sich mit dem Alkohol (c) in flüssiger Form mischen, und die in der Reaktion inert sind. Bevorzugt ist das Reaktionsgemisch eine Lösung und liegt in flüssiger Form vor, wobei das Kohlenmonoxid eine zumindest teilweise in der Flüssigkeit verteilte Gasphase bilden kann. Bevorzugt wird bei dem Verfahren das Metallcarboxylat als Lösung in dem Lösungsmittel (d) bereitgestellt und dem Reaktionsgemisch zugegeben.

Das Lösungsmittel weist Kohlenwasserstoffe auf oder besteht daraus. Die Kohlenwasserstoffe können aliphatisch, aromatisch oder Gemische davon sein. Bevorzugt werden Kohlenwasserstoffgemische eingesetzt. Insbesondere geeignet sind Gemische aus Aliphaten, beispielsweise isocyclische und cyclischen Aliphaten. Diese können einen geringen Anteil an Aromaten aufweisen, der beispielsweise kleiner 5 Gew.-% oder kleiner 2 Gew.-% ist. Ebenfalls geeignet können nicht cyclische Kohlenwasserstoffe sein, die beispielsweise verzweigt oder linear sein können. Polyole wie beispielsweise Glykolether können in geringen Mengen wie beispielsweise bis 2%, ebenfalls anwesend sein und beeinträchtigen die Reaktion nicht.

In einer bevorzugten Ausführungsform besteht das Reaktionsgemisch aus den Komponenten (a) bis (d). Erfindungsgemäß wurde gefunden, dass nur dann eine effiziente Reaktion möglich ist, wenn die Komponenten (a) bis (d) enthalten sind. Weitere Reaktanden oder Additive sind nicht erforderlich. Daher kann das kontinuierliche Verfahren auf relativ einfache Weise eingestellt, durchgeführt und kontrolliert werden.

Es ist von Vorteil, dass die Reaktion nur mit wenigen Ausgangsverbindungen (a) bis (d) effizient durchgeführt werden kann. Somit müssen keine weiteren Komponenten zugegeben werden, welche die Reaktion selbst oder das Produkt nachteilig beeinflussen. In bevorzugten Ausführungsformen enthält das Reaktionsgemisch nicht eine oder mehrere der folgenden Komponenten:
- Wasserstoff
- ein zusätzliches Reaktionsmittel
- ein Metall
- ein zusätzliches Metallsalz, insbesondere das Salz eines Nebengruppenmetalls
- zusätzliches Dicobaltoctacarbonyl.

Es ist beispielsweise nicht erforderlich, reaktive Verbindungen wie Wasserstoff zuzugeben, die nur schwer handhabbar sind. Bei Verfahren aus dem Stand der Technik zur Herstellung von Metallcarbonylen wird oft ein Gemisch aus Kohlenmonoxid und Wasserstoff zugegeben. Wegen der hohen Reaktivität von Wasserstoff wird das Verfahren komplizierter, aufwändiger und teurer. Das Reaktionsmittel kann auch ein Reduktionsmittel sein, da zusätzliche Reduktionsmittel, wie organische Verbindungen, die als Reduktionsmittel eingesetzt werden oder auch Metalle wie z.B. Zn, Hg, Al, Mg nicht erforderlich und daher vorteilhaft nicht enthalten sind. Es ist auch nicht erforderlich, zusätzliche Metalle oder Metallverbindungen einzusetzen, die das Produkt verunreinigen können. Insbesondere wenn das Metallcarbonyl in Beschichtungsprozessen wie ALD zur Herstellung elektronischer Bauteile eingesetzt wird, sind selbst geringfügige Verunreinigungen durch andere Metalle nicht akzeptabel.

In einer bevorzugten Ausführungsform wird die Reaktion bei einer Temperatur im Bereich von 30°C bis 300°C durchgeführt. Die Temperatur ist bevorzugt größer 150°C oder größer 180°C, und dabei bevorzugt kleiner 300°C und kleiner 250°C. Bevorzugt liegt die Temperatur im Bereich von 100°C und 300°C, insbesondere von 150°C und 250°C. Insbesondere die Herstellung von Dicobaltoctacarbonyl ist besonders effizient im Bereich von 180°C bis 220°C, oder insbesondere von 190°C bis 210°C oder von 180°C bis 200°C. Solche Temperaturen, und insbesondere eine Temperatur von etwa 200°C, sind insbesondere zur Herstellung von Dicobaltoctacarbonyl geeignet.

In einer bevorzugten Ausführungsform wird die Reaktion bei einem Druck im Bereich von 50 bar bis 500 bar durchgeführt. Besonders geeignet ist ein Druck größer 100 bar oder größer 150 bar, und dabei insbesondere kleiner 300 bar oder kleiner 250 bar. Der Druck liegt bevorzugt von 150 bis 250 bar. Insbesondere die Herstellung von Dicobaltoctacarbonyl ist besonders effizient im Bereich von 180 bar bis 210 bar oder von 190 bar bis etwa 210 bar, insbesondere etwa 200 bar.

Das Kohlenmonoxid wird bevorzugt im molaren Überschuss gegenüber dem Metall (Metallcarboxylat) eingesetzt. Dabei ist das molare Verhältnis bevorzugt größer als 2:1 oder größer 3:1. In einer bevorzugten Ausführungsform ist das molare Verhältnis von Kohlenmonoxid zum Metallcarboxylat größer als 5:1. Das Kohlenmonoxid kann auch in deutlichem Überschuss eingesetzt werden, beispielsweise größer 10:1, größer 50:1 oder größer 200:1. Erfindungsgemäß wurde jedoch festgestellt, dass bereits ein relativ geringer Überschuss von beispielsweise 7,5:1 ausreicht, um eine schnelle Reaktion mit hoher Ausbeute durchzuführen. Daher ist es vorteilhaft, aus Effizienzgründen und zur Materialeinsparung den Überschuss von Kohlenmonoxid eher gering zu halten. Bevorzugt ist daher ein molares Verhältnis von Kohlenmonoxid zum Metallcarboxylat von kleiner 50:1, kleiner 20:1 oder kleiner 10:1. Insbesondere liegt das molare Verhältnis von Kohlenmonoxid zum Metallcarboxylat im Bereich von 3:1 bis 20:1.

Erfindungsgemäß wurde gefunden, dass bei Durchführung eines kontinuierlichen Verfahrens bereits bei sehr niedrigen mittleren Verweilzeiten im Bereich von etwa 6 bis 12 Minuten sehr hohe Ausbeuten von über 80% erreicht werden können. Dies war unerwartet, weil im Stand der Technik bekannt war, dass vergleichbare Batchreaktionen eine Reaktionsdauer von mehreren Stunden erfordern (US 2,865,718). Solche langsamen Reaktionen eigenen sich im Allgemeinen nicht zur kontinuierlichen Durchführung. Dies liegt daran, dass der Reaktionsfluss in dem Reaktor sehr langsam eingestellt werden müsste. Dadurch können im Reaktorinneren Ausfällungen entstehen, die den Reaktionsverlauf beeinträchtigen. Daher war es ausgehend vom Stand der Technik nicht zu erwarten, dass ein Batch-Verfahren gemäß der US 2,865,718 kontinuierlich durchführbar wäre, geschweige denn mit kurzen Reaktionszeiten und unter Erzielung hoher Ausbeuten.

Die Menge an Alkohol (c), insbesondere Butanol, wird so ausgewählt, dass eine optimale Reaktion stattfindet. Bevorzugt liegt das molare Verhältnis von Cobalt zu Butanol zwischen 1:1 und 1:6.

Die erfindungsgemäße Reaktion kann im Wesentlichen in Abwesenheit von Wasser erfolgen. Dadurch kann ein Metallcarbonyl erhalten wird, das ganz oder im Wesentlichen wasserfrei ist. Dies ist vorteilhaft, weil für viele Folgeanwendungen, wie AVD, wasserfreie Metallcarbonyle benötigt werden. Bevorzugt liegt der Wassergehalt des Reaktionsgemischs bei 0 Gew.-% bis 2 Gew.-%, insbesondere bei 0,1 bis 1,6 Gew.-% oder 0,2 bis 1,1 Gew.-%. Bevorzugt ist der Wassergehalt des Endproduktes kleiner als 0,5 Gew.-%, bevorzugt kleiner als 0,2 Gew.-%.

In einer bevorzugten Ausführungsform wird das Metallcarbonyl als Feststoff ausgefällt und abgetrennt. Bevorzugt wird das Reaktionsgemisch nach der Umsetzung entspannt, abgekühlt und das Reaktionsgemisch ausgefällt. Bevorzugt wird das Reaktionsprodukt gesammelt, nachdem es die Reaktionszone im Reaktor durchlaufen hat. Dabei wird bevorzugt eine flüssige Phase, die das Reaktionsprodukt enthält, gesammelt. Bevorzugt wird eine Fraktion mit dem Reaktionsprodukt in einem Phasentrenner abgetrennt. Die Ausfällung des Metallcarbonyls als Feststoff erfolgt bevorzugt durch Kühlung. Dabei kann das Reaktionsgemisch beispielsweise auf Raumtemperatur, oder auf eine Temperatur kleiner 10°C oder kleiner -10°C abgekühlt werden. Bevorzugt wird das Reaktionsgemisch auf -18°C abgekühlt. Um eine vollständige Ausfällung zu erreichen, kann das Reaktionsgemisch dabei über einen längeren Zeitraum inkubiert werden, beispielsweise für 30 Minuten bis 10 Stunden. Das Metallcarbonyl wird gewaschen, bevorzugt mit einem Kohlenwasserstoff wie z.B. Hexan oder Iso-Hexan. Nach dem Waschen weist das Metallcarbonyl bevorzugt noch einen geringen Anteil des Kohlenwasserstoffs auf, bevorzugt ca. 0,5-8 % Gew.%. Ein derartiges Produkt zeigt eine erhöhte Lagerstabilität.

Die Reaktion kann in einem üblichen Reaktor für kontinuierliche Reaktionen durchgeführt werden. Dabei ist insbesondere ein einfacher Rohrreaktor geeignet, bei dem die Ausgangsstoffe auf einer Seite eingeführt werden, und wobei am Auslass des Reaktors das Produkt gesammelt wird. Der Vorteil solcher einfacher Rohrreaktoren ist, dass die Reaktion insgesamt relativ einfach gesteuert und kontrolliert werden kann. Die Hochskalierung ist auf relativ einfache Weise möglich, weil in einem Rohrreaktor Temperatur und Druck konstant eingestellt werden können. In einer bevorzugten Ausführungsform weist der Reaktor einen Mischer auf, um eine fortlaufende Durchmischung des Reaktionsgemisches zu gewährleisten. Bevorzugt wird ein statischer Mischer eingesetzt, um eine turbulente Strömung zu erzeugen.

Mit dem erfindungsgemäßen Verfahren können Metallcarbonyle in hohen Ausbeuten erhalten werden. In einer bevorzugten Ausführungsform ist die Ausbeute mindestens 70% oder mindestens 80%, bezogen auf die eingesetzt Menge des Metalls.

Bevorzugt wird das Produkt in einer Raum-Zeit-Ausbeute (Space-Time-Yield, STY) von größer 5.000, bevorzugt größer 6.000, noch mehr bevorzugt größer 7.000 kg/m³d erhalten. Somit ist die kontinuierliche Reaktion mit hoher Effizienz und Ausbeute durchführbar.

Das erfindungsgemäße Verfahren ist besonders geeignet zur Herstellung von Dicobaltoctacarbonyl in einem kontinuierlichen Verfahren. In einer bevorzugten Ausführungsform enthält das Reaktionsgemisch dabei folgende Komponenten:
(a) Cobalt(II)bis(2-ethylhexanoat),
(b) Kohlenmonoxid,
(c) Butanol, und
(d) ein Lösungsmittel, das Kohlenwasserstoffe aufweist,

wobei das Reaktionsgemisch keinen Wasserstoff enthält,
wobei die Reaktion bei einer Temperatur im Bereich von 100°C bis 300°C und bei einem Druck im Bereich von 50 bar bis 500 bar durchgeführt wird. Dabei ist das molare Verhältnis von Kohlenmonoxid zu Cobalt bevorzugt größer als 3:1, wobei die mittlere Verweilzeit bevorzugt von 2 bis 30 min ist, und wobei die Ausbeute bevorzugt mindestens 70% ist, bezogen auf die eingesetzte Menge des Metalls.

Die Herstellung von Dicobaltoctacarbonyl erfolgt dabei bevorzugt durch Umsetzung eines Cobaltcarboxylats mit Kohlenmonoxid in Butanol bei Drücken bis zu 200 bar und Temperaturen von 200°C. Die Reaktanden befinden sich dabei in homogener Phase und reagieren binnen Minuten zum Produkt. Nach Entspannen der Reaktionsmischung auf Normaldruck und Kühlung auf -18°C fällt das Dicobaltoctahexanoat in orangefarbenen Nadeln aus. Die simple und schnelle Reaktionsführung ermöglichen eine kontinuierliche Reaktionsführung, welche im Pilotmaßstab erfolgreich getestet wurde (Rohrreaktor 12 mm Durchmesser, etwa 1 m Länge, Durchflusszeiten von etwa 12 Minuten).

Durch gezielte Verbesserung und Vereinfachung mehrerer bekannter Literatursynthesen und der Beobachtung, dass die Verwendung von stark Kohlenstoff-haltigen Cobaltprecursoren zu hohen Ausbeuten führen, konnte ein kontinuierlicher Prozess gefunden werden, der ohne weitere größere Behandlung zu reinem Co₂(CO)₈ in hohen Ausbeuten führt. Da keine zusätzlichen Reduktionsmittel wie Wasserstoff oder Reduktionsmetalle Verwendung finden, ist der Prozess zudem sicherer und führt zu Produkt mit hoher Reinheit.

Neben Cobalt-Ethylhexanoat werden als weitere Reaktanden nur CO und Butanol verwendet, während Wasserstoff oder Reduktionsmittel wie Zn nicht erforderlich sind.

Das Produkt fällt in reiner Form an. Es werden keine wesentlichen Verunreinigungen durch andere Cobaltverbindungen, wie Cobalthydride, gebildet oder gefunden. Das Produkt liegt nicht in gelöster Form vor, sondern fällt nach der Reaktion und Verringerung der Temperatur auf ca. -18°C aus. Die Reaktionszeit ist sehr kurz (wenige Minuten). Dabei ist vorteilhaft, dass das Reaktionsgemisch kein Wasser aufweist. Insbesondere in Gegenwart größerer Mengen Wasser, wie beispielsweise bei dem in der DE 23 32 638 A1 beschriebenen Verfahren, sinkt die Ausbeute, und durch den verwendeten Wasserstoff entsteht als Nebenprodukt Hydridocobalttetracarbonyl.

Das Verfahren ist gegenüber bekannten Synthesen für Co₂(CO)₈ wesentlich effizienter, sicherer und erzielt höhere Reinheiten. Das Verfahren kann in einfachen, üblichen Produktionsanlagen realisiert werden. Wegen der Einfachheit des Verfahrens und der Apparatur und der wenigen Ausgangsstoffe kann das Verfahren auf einfache Weise hochskaliert werden. Daher könnte das Verfahren selbst dann effizient und auf wettbewerbsfähige Weise durchgeführt werden, wenn die Ausbeuten niedrig wären und beispielsweise bei 20% liegen würden. Erfindungsgemäß können aber sehr hohe Ausbeuten von bis zu 81% und mehr erzielt werden.

Die Erfindung stellt ein effizientes, sicheres Verfahren bereit, das die Herstellung von sauberem Produkt erlaubt. Die Anlage ist kontinuierlich fahrbar, was eine effektive und kontrollierte Herstellung des Produktes ermöglicht. Es werden keine zusätzlichen Gase wie Wasserstoff oder sonstige Reagentien benötigt. Molare Mengen von Reduktionsmittel (Zn oder andere) entfallen. Die Metallcarbonyle eignen sich wegen der hohen Reinheit insbesondere für elektronische Anwendungen und ALD-Verfahren (Atomic Layer Deposition). Sie eigenen sich beispielsweise auch als Katalysatoren oder Katalysatorvorstufen oder zur Herstellung hochreiner Produkte, wie solche für pharmazeutische Anwendungen, feinchemische Produkte oder für Anwendungen in der Folgechemie.

### Ausführungsbeispiele

### A: Durchführung

In verschiedenen kontinuierlichen Verfahren wurde Dicobaltoctacarbonyl aus Cobalt-2-ethylhexanoat, Kohlenmonoxid und Butanol hergestellt.

Eine Lösung von 70% Cobalt-2-ethylhexanoat in 25% Kohlenwasserstoffgemisch (Gemisch aus iso- und cyclischen Aliphaten mit weniger als 2 Gew.-% Aromaten und Glykolether als Stabilisator; VALlREX^{®} Co 12% D60 UPR; Firma Umicore) wurde mit n-Butanol verdünnt und mit einer Flußrate von 5 mL/min in einen Rohrreaktor gepumpt. Die gleiche Flußrate wurde für Kohlenmonoxid (CO) eingestellt, das in deutlichem Überschuss bezogen auf Kobalt zugeführt wurde. Unter der Annahme von Kohlenmonoxid (CO) als ideales Gas entsprach das molare Verhältnis von Kohlenmonoxid (CO) zu Kobalt 420:1. Die Reaktion wurde bei einer Temperatur von 200°C und einem Druck von 200 bar durchgeführt. Die Residenzzeit des Reaktionsgemisches im Reaktor entsprach etwa 12,5 Minuten.

Die Bedingungen des kontinuierlichen Verfahrens wurden variiert (Beispiele 4 bis 17). Die jeweiligen Versuchsbedingungen und Ergebnisse werden in der Tabelle 1 zusammengefasst.

Der Rohrreaktor hatte eine Länge von 1100 mm und einen Durchmesser von 12 mm bei einem Volumen von 122 mm (Beispiele 4 bis 13) bzw. einen Durchmesser von 18 mm bei einem Volumen 279 ml (Beispiele 14 bis 17). Am Ende des Reaktors war eine Kühlkammer angeschlossen, in der das Reaktionsgemisch in einem Phasentrenner bei etwa 50°C gesammelt wurde. Die flüssige Phase, die während einer Dauer von 70 min gesammelt worden war, wurde in einem Tiefkühlschrank gekühlt, bis das Produkt kristallisierte. Das Produkt wurde abfiltriert und mit kaltem Diethylether gewaschen.

In Tabelle 1 sind die molaren Verhältnisse der eingesetzten Lösung von Cobalt-2-ethylhexanoat in Kohlenwasserstoffgemisch (VALIREX^{®}) zu Butanol, sowie von Kohlenmonoxid (CO) zu Cobalt (Co) aufgeführt. In der Spalte "Mischer" ist angegeben, ob bei der Versuchsanordnung ein statischer Mischer eingesetzt wurde, um die gewünschte turbulente Strömung sicherzustellen. Die Spalte "STY" gibt die Raum-Zeit-Ausbeute (Space-Time-Yield) an. In der Spalte "Alter" ist angegeben, wie lange die Lösung VALlREX^{®} vorher gelagert wurde.

Zum Vergleich wurden drei diskontinuierliche Verfahren (Batchverfahren) durchgeführt (Vergleichsbeispiele 1 bis 3). In Tabelle 1 weisen die Angaben "Batch" und "Kont." auf ein im Batchverfahren oder kontinuierliches Verfahren hin. Bei Versuchen, die nicht kontinuierlich durchgeführt wurden, ist jeweils das Volumen des verwendeten Reaktors angegeben.

### B: Ergebnisse

Die Ergebnisse zeigen, dass das erfindungsgemäße Verfahren mit sehr niedriger Reaktionszeit durchführbar ist, wobei dennoch hohe Ausbeuten erhältlich sind. Die mittleren Verweilzeiten in dem kontinuierlichen Reaktor können dabei in Bereichen von nur etwa 6 bis 24 min eingestellt werden. Dabei wurde gemäß Beispiel 17 eine Ausbeute von Dicobaltoctacarbonyl von 81% erhalten. Dies entsprach der Ausbeute bei einer Batchreaktion unter vergleichbaren Bedingungen. Bei dem kontinuierlichen Verfahren war jedoch die Raum-Zeit-Ausbeute drastisch erhöht auf bis zu 8457 g·(m³·d)⁻¹. Bei den Beispielen 5 bis 7 wurden geringere Ausbeuten erhalten, was möglicherweise an der längeren Lagerung des Cobalt-2-ethylhexanoats liegt. Die Ergebnisse zeigen insgesamt, dass die erfindungsgemäße Reaktion sehr schnell und mit hohen Ausbeuten verläuft, wobei das kontinuierliche Verfahren noch deutlich effizienter als ein vergleichbares Batchverfahren durchgeführt werden kann.

**Tabelle 1: Zusammenfassung der Reaktionsbedingungen und Ergebnisse der Beispiele 1 bis 17**

| **Beispiel** | **Art** | **Alter** | **Mischer** | **n_{Valirex/}n_{BuOH}** | **n_{CO}/ n_{Co}** | **mittl. Verweilzeit [min]** | **Reaktionszeit [min]** | **Ausbeute^{a}** | **STY [kg/m³·d]** | **V (Reaktor) [ml]** |
|---|---|---|---|---|---|---|---|---|---|---|
| 1 (Vergleich) | Batch | | | | | 40 | 40 | 84% | 2505 | 250 |
| 2 (Vergleich) | Batch | | | | | 40 | 40 | 89% | 2238 | 1300 |
| 3 (Vergleich) | Batch | | | | | 30 | 30 | 89% | 2175 | 250 |
| 4 | Kont. | 9 Mo. | nein | 1/1 | 420/1 | 12.5 | 70 | 81% | 8457 | |
| 5 | Kont. | 9 Mo. | nein | 2.7/1 | 7.5/1 | 12.5 | 30 | 16% | 1882 | |
| 6 | Kont. | 9 Mo. | nein | 2.7/1 | 5.5/1 | 12.5 | 30 | 23% | 3302 | |
| 7 | Kont. | 9 Mo. | nein | 1/1 | 7.511 | 12.5 | 40 | 35% | 3686 | |
| 8 | Kont. | frisch | nein | 1/1 | 7.5/1 | 12.5 | 30 | 62% | 6451 | |
| 9 | Kont. | frisch | nein | 1/1 | 7.5/1 | 12.5 | 80 | 69% | 7200 | |
| 10 | Kont. | frisch | nein | 2.7/1 | 7.5/1 | 12.5 | 80 | 43% | 5155 | |
| 11 | Kont. | frisch | nein | 1/1 | 7.5/1 | 6.25 | 41 | 22% | 4496 | |
| 12 | Kont. | frisch | nein | 1/1 | 15/1 | 7,5 | 80 | 63% | 6610 | |
| 13 | Kont. | frisch | nein | 1/1 | 15/1 | 25 | 80 | 68% | 3528 | |
| 14 | Kont. | frisch | ja | 1/1 | 7.5/1 | 12 | 60 | 55% | 6171 | |
| 15 | Kont. | frisch | ja | 1/1 | 7.5/1 | 12 | 60 | 66% | 7371 | |
| 16 | K | frisch | ja | 1/1 | 7.5/1 | 12 | 60 | 44% | 4911 | |
| 17 | K | frisch | ja | 1/1 | 7.5/1 | 24 | 75 | 81% | 4512 | |

## Patentansprüche

1. Kontinuierliches Verfahren zur Herstellung von Cobaltcarbonylen, wobei in einem Reaktor eine Reaktion mit einem Reaktionsgemisch, das folgende Komponenten enthält, durchgeführt wird:
(a) Cobalt(II)bis(2-ethylhexanoat),
(b) Kohlenmonoxid,
(c) einen aliphatischen Alkohol mit 4 bis 7 Kohlenstoffatomen, bevorzugt Butanol, und
(d) ein Lösungsmittel, das Kohlenwasserstoffe aufweist,
wobei die mittlere Verweilzeit in dem Reaktor kleiner 60 min ist.

2. Verfahren gemäß Anspruch 1, wobei das Metallcarbonyl Dicobaltoctacarbonyl (Co₂(CO)₈ ist.

3. Verfahren gemäß mindestens einem der vorhergehenden Ansprüche, wobei der Alkohol *n*-Butanol ist.

4. Verfahren gemäß mindestens einem der vorhergehenden Ansprüche, wobei das Lösungsmittel aus Kohlenwasserstoffen besteht.

5. Verfahren gemäß mindestens einem der vorhergehenden Ansprüche, wobei die Reaktion bei einer Temperatur im Bereich von 100°C bis 300°C, insbesondere von 180°C bis 220°C, durchgeführt wird, und/oder wobei die Reaktion bei einem Druck im Bereich von 50 bar bis 500 bar, insbesondere von 180 bar bis 210 bar, durchgeführt wird.

6. Verfahren gemäß mindestens einem der vorhergehenden Ansprüche, wobei das molare Verhältnis von Kohlenmonoxid zum eingesetzten Metallcarboxylat größer als 3:1 ist.

7. Verfahren gemäß mindestens einem der vorhergehenden Ansprüche, wobei die mittlere Verweilzeit zwischen 5 min und 30 min ist.

8. Verfahren gemäß mindestens einem der vorhergehenden Ansprüche, wobei das Reaktionsgemisch nicht eine oder mehrere der folgenden Komponenten enthält:
- Wasserstoff
- ein zusätzliches Reaktionsmittel
- ein Metall
- ein zusätzliches Metallsalz, insbesondere das Salz eines Nebengruppenmetalls
- zusätzliches Dicobaltoctacarbonyl.

9. Verfahren gemäß mindestens einem der vorhergehenden Ansprüche, wobei das Metallcarbonyl als Feststoff ausfällt und abgetrennt wird, und/oder wobei das Metallcarbonyl mit mindestens einem Kohlenwasserstoff gewaschen wird und ein Produkt erhalten wird, das 0,5 bis 8 Gew.% des Kohlenwasserstoffs aufweist, bezogen auf das Metallcarbonyl.

10. Verfahren gemäß mindestens einem der vorhergehenden Ansprüche, wobei die Ausbeute mindestens 70% ist, bevorzugt mindestens 80% ist, bezogen auf die eingesetzt Menge des Metalls.

11. Verfahren gemäß mindestens einem der vorhergehenden Ansprüche, wobei die Raum-Zeit-Ausbeute größer 6.000 kg/m³d ist.

12. Verfahren gemäß mindestens einem der vorhergehenden Ansprüche zur Herstellung von Dicobaltoctacarbonyl, wobei das Reaktionsgemisch folgende Komponenten enthält:
(a) Cobalt(II)bis(2-ethylhexanoat),
(b) Kohlenmonoxid,
(c) Butanol, und
(d) ein Lösungsmittel, das Kohlenwasserstoffe aufweist, wobei das Reaktionsgemisch keinen Wasserstoff enthält,
wobei die Reaktion bei einer Temperatur im Bereich von 100°C bis 300°C und bei einem Druck im Bereich von 50 bar bis 500 bar durchgeführt wird.

## Claims

1. A continuous process for the production of cobalt carbonyls wherein a reaction is carried out in a reactor with a reaction mixture containing the following components:
(a) Cobalt(II) bis(2-ethylhexanoate),
(b) Carbon monoxide,
(c) an aliphatic alcohol with 4 to 7 carbon atoms, preferably butanol, and
(d) a solvent containing hydrocarbons,
where the average residence time in the reactor is less than 60 min.

2. The process according to claim 1, wherein the metal carbonyl is dicobaltoctacarbonyl (Co₂(CO)₈.

3. A process according to at least one of the preceding claims, wherein the alcohol is *n-*butanol.

4. A process according to at least one of the preceding claims, wherein the solvent consists of hydrocarbons.

5. A process according to at least one of the preceding claims, wherein the reaction is carried out at a temperature in the range from 100°C to 300°C, in particular from 180°C to 220°C, and/or
wherein the reaction is carried out at a pressure in the range from 50 bar to 500 bar, in particular from 180 bar to 210 bar.

6. A process according to at least one of the preceding claims, wherein the molar ratio of carbon monoxide to metal carboxylate employed is greater than 3:1.

7. A method according to at least one of the preceding claims, wherein the mean residence time is between 5 min and 30 min.

8. A process according to at least one of the preceding claims, wherein the reaction mixture does not comprise one or more of the following components:
- Hydrogen
- an additional reactant
- A metal
- an additional metal salt, in particular the salt of a transition metal
- additional dicobaltoctacarbonyl.

9. A process according to at least one of the preceding claims, wherein the metal carbonyl precipitates as a solid and is separated, and/or
wherein the metal carbonyl is washed with at least one hydrocarbon and a product is obtained comprising 0.5 to 8% by weight of the hydrocarbon based on the metal carbonyl.

10. A process according to at least one of the preceding claims, wherein the yield is at least 70%, preferably at least 80%, based on the amount of the metal used.

11. A process according to at least one of the preceding claims, wherein the space-time yield is greater than 6,000 kg/m³d.

12. A process according to at least one of the preceding claims for the preparation of dicobaltoctacarbonyl, wherein the reaction mixture comprises the following components:
(a) Cobalt(II) bis(2-ethylhexanoate),
(b) Carbon monoxide,
(c) butanol, and
(d) a solvent containing hydrocarbons,
whereby the reaction mixture does not contain hydrogen,
wherein the reaction is carried out at a temperature in the range of 100°C to 300°C and at a pressure in the range of 50 bar to 500 bar.

## Revendications

1. Procédé continu de préparation de cobalt-carbonylène, dans lequel on effectue dans un réacteur une réaction avec un mélange réactionnel qui contient les composants suivants :
(a) bis(2-éthylhexanoate) de cobalt (II),
(b) Monoxyde de carbone,
(c) un alcool aliphatique ayant de 4 à 7 atomes de carbone, de préférence le butanol, et
(d) un solvant contenant des hydrocarbures,
le temps de séjour moyen dans le réacteur étant inférieur à 60 min.

2. Procédé selon la revendication 1, dans lequel le métal-carbonyle est le dicobaltoctacarbonyle (Co₂(CO)₈.

3. Procédé selon au moins l'une des revendications précédentes, dans lequel l'alcool est le *n*-butanol.

4. Procédé selon au moins l'une des revendications précédentes, dans lequel le solvant est constitué d'hydrocarbures.

5. Procédé selon au moins l'une des revendications précédentes, dans lequel la réaction est effectuée à une température comprise entre 100°C et 300°C, en particulier entre 180°C et 220°C, et/ou
la réaction étant effectuée à une pression comprise dans la plage de 50 bars à 500 bars, en particulier de 180 bars à 210 bars.

6. Procédé selon au moins l'une des revendications précédentes, dans lequel le rapport molaire du monoxyde de carbone au carboxylate de métal utilisé est supérieur à 3:1.

7. Procédé selon au moins l'une des revendications précédentes, dans lequel le temps de séjour moyen est compris entre 5 min et 30 min.

8. Procédé selon au moins l'une des revendications précédentes, dans lequel le mélange réactionnel ne contient pas un ou plusieurs des composants suivants :
- Hydrogène
- un réactif supplémentaire
- un métal
- un sel métallique supplémentaire, en particulier le sel d'un métal du groupe secondaire
- dicobaltoctacarbonyle supplémentaire.

9. Procédé selon au moins l'une des revendications précédentes, dans lequel le métal-carbonyle précipite sous forme de solide et est séparé, et/ou
dans lequel le carbonyle métallique est lavé avec au moins un hydrocarbure et on obtient un produit comprenant de 0,5 à 8 % en poids de l'hydrocarbure, par rapport au carbonyle métallique.

10. Procédé selon au moins l'une des revendications précédentes, dans lequel le rendement est d'au moins 70%, de préférence d'au moins 80%, par rapport à la quantité de métal mise en oeuvre.

11. Procédé selon au moins l'une des revendications précédentes, dans lequel le rendement spatio-temporel est supérieur à 6000 kg/m³d.

12. Procédé selon au moins l'une des revendications précédentes pour la préparation de dicobaltoctacarbonyle, dans lequel le mélange réactionnel contient les composants suivants :
(a) bis(2-éthylhexanoate) de cobalt (II),
(b) Monoxyde de carbone,
(c) butanol, et
(d) un solvant contenant des hydrocarbures,
le mélange réactionnel ne contenant pas d'hydrogène,
la réaction étant effectuée à une température comprise dans la plage de 100°C à 300°C et à une pression comprise dans la plage de 50 bars à 500 bars.
